# EUROPEAN PATENT APPLICATION

(11) **EP 4 417 081 A1**
(43) Date of publication of application: **21.08.2024**
(21) Application number: 24157656.0
(22) Date of filing: 14.02.2024
(51) Int. Cl.: A43D 8/34, A43B 23/02, B32B 5/02

(54) **METHOD FOR PRODUCING A MULTI-LAYERED ELEMENT PROVIDED WITH A REINFORCEMENT FOR A SHOE UPPER, MULTI-LAYERED ELEMENT PRODUCED BY SUCH A METHOD, AND SHOE UPPER PROVIDED WITH SUCH A REINFORCEMENT**

(30) Priority: 17.02.2023 IT 202300002748
(71) Applicant: ALC Tecnologie Adesive S.r.l., 10123 Torino (IT)
(72) Inventor: VICENTINI, Luca, 10123 Torino (IT)
(74) Representative: Studio Torta S.p.A.

(57) **Abstract**

The method provides the steps of cutting a product (33,35) along a predefined path (37), so as to form the perimeter of a support element (20) having a reinforcement layer (9) for a shoe upper (2), and of skiving the reinforcement layer (9) along at least a part of the perimeter by removing material from one of its faces (11); the method is carried out starting from a multi-layered product (33,35) consisting of a reinforcement sheet (21), which represents the reinforcement layer (9), a solid adhesive material (22) of a PSA type, attached to the reinforcement sheet (21) on the face opposite the face to be skived, and a liner sheet (23) attached in a removable manner to the solid adhesive material (22) .

## Description

### CROSS-REFERENCE TO RELATED APPLICATIONS

This patent application claims priority from Italian patent application no. 102023000002748 filed on February 17, 2023, the entire disclosure of which is incorporated herein by reference.

### TECHNICAL FIELD

The present invention relates to a manufacturing method for producing an element provided with a reinforcement, such as a toe cap, which is to be applied in a shoe upper of a shoe during the assembly of said shoe upper, within the shoe manufacturing process.

### BACKGROUND

In most applications, the shoe upper is a multi-layered component, i.e. a component consisting of an outer layer made of high-quality material, defining the outer surface of the shoe, an inner sheet or lining, defining the internal surface facing the user's foot, and one or more thermo-adhesive reinforcements, which are placed between the outer layer and the lining, and are obtained by cutting a sheet material along a profile that is predefined according to the type of shoe and according to the area in which these reinforcements are applied.

Such reinforcements, if applied at the toe of the shoe, are usually called "toe caps".

After the cutting of the sheet material, in general, the reinforcement is subjected to a so-called "skiving" operation in order to reduce the thickness at its outer edge and, thus, prevent the user from feeling, with his or her foot inside the shoe, a kind of small ridge along the lining of the shoe upper at that edge.

After the skiving, the reinforcements are firmly fixed to both the outer layer of the shoe upper and to the lining by means of adhesives.

As mentioned above, in general, the reinforcements of a known type are thermo-adhesive: in other words, one of the two surfaces of the reinforcement is impregnated with gluing material, which is activated by heating to a given temperature, in order to firmly attach this surface to the outer layer of the shoe upper.

The opposite surface, on the other hand, is the one that has been subjected to skiving and is fixed to the lining by means of a homogeneous layer of liquid glue, sprayed through nozzles.

After the assembly of the layers of the shoe upper, the whole is pressed using a preform press in order to complete the adhesion.

Finally, in order to obtain the desired shape of the shoe upper, the latter is shaped immediately after the aforementioned pressing, while the glues are still wet (i.e. before the gluing materials crystallize).

In the context of these solutions, there is felt to be a need to simplify the production chain used to produce the reinforcements and couple them in the shoe upper. In particular, there is felt to be a need to simplify the operations with which the reinforcement is bonded to the outer layer of the shoe upper, so as to optimize and/or reduce the personnel and/or time and/or machinery required for these operations in the known solutions.

Moreover, it is preferable to eliminate the volatile substances that normally form in the known solutions from the adhesives used. In fact, the presence of volatile substances is highly undesirable, inasmuch as it obliges personnel to wear protective masks and/or imposes the use of suction units during the operations of bonding and assembling the shoe upper.

### SUMMARY

The object of the present invention is to provide a manufacturing method for producing an element provided with a reinforcement for a shoe upper, which allows the requirements set forth in the foregoing to be fulfilled, preferably in a simple and economical manner.

According to the present invention, a manufacturing method is provided, as defined in claim 1.

The present invention further relates to a support element obtained according to such a manufacturing method, as defined in claim 12, and to a shoe upper as defined in claim 14.

Preferred embodiments are additionally defined in the remaining dependent claims.

### BRIEF DESCRIPTION OF THE DRAWINGS

The invention will now be described with reference to the accompanying drawings, which illustrate a non-limiting example embodiment thereof, wherein:
Figure 1 is a perspective view of a shoe having a shoe upper that has been reinforced by means of a toe cap obtained according to the teachings of the present invention;
Figure 2 is an exploded, perspective view, with parts removed for clarity, of the shoe of Figure 1;
Figure 3 illustrates an exploded, perspective, simplified view of the shoe upper of Figures 1 and 2, during an assembly step;
Figure 4 is a schematic section on an enlarged scale, along the line IV-IV of Figure 3;
Figure 5 is a diagram showing, in sequence, manufacturing steps for producing a reinforcement element provided with a toe cap to reinforce the shoe upper, according to a preferred embodiment of the method of the present invention;
Figure 6 illustrates a further step of the method of the present invention;
Figure 7 shows, in a perspective view, the reinforcement element manufactured according to the method of the present invention; and
Figure 8 schematically illustrates a system for binding together a series of reinforcement elements with toe caps that can be used to reinforce respective shoe uppers.

### DESCRIPTION OF EMBODIMENTS

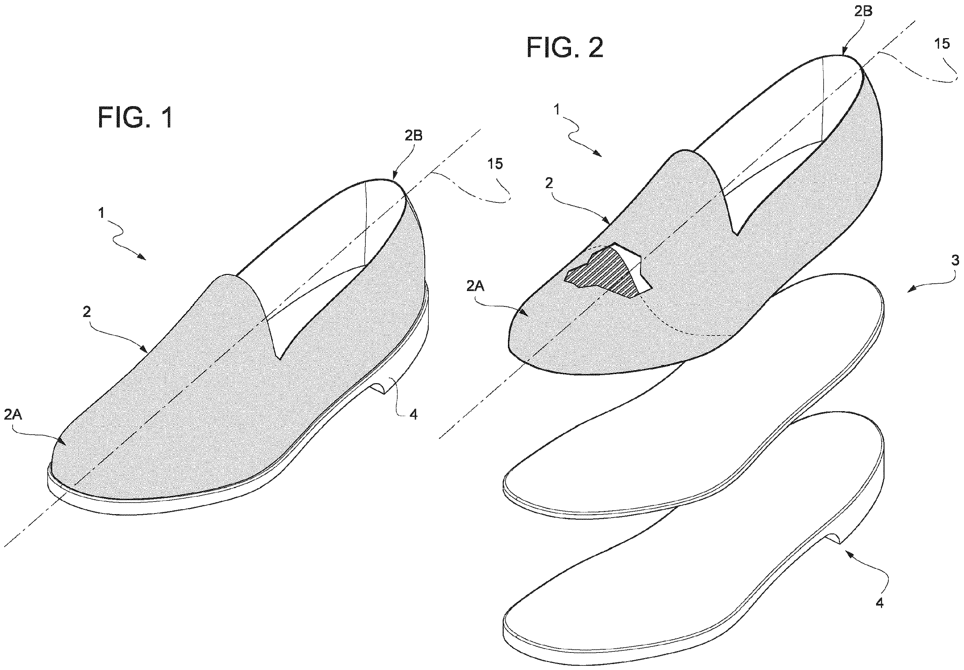

In Figures 1 and 2, the reference number 1 indicates, generically and as a whole, a shoe comprising a shoe upper 2, an insole 3, to which the shoe upper 2 is firmly joined by stitching or bonding, and a sole 4.

According to a variant, not illustrated, the shoe 1 does not include the insole 3, and the shoe upper 2 is firmly joined to the sole 4 by means of an injection molding process carried out to form said sole 4.

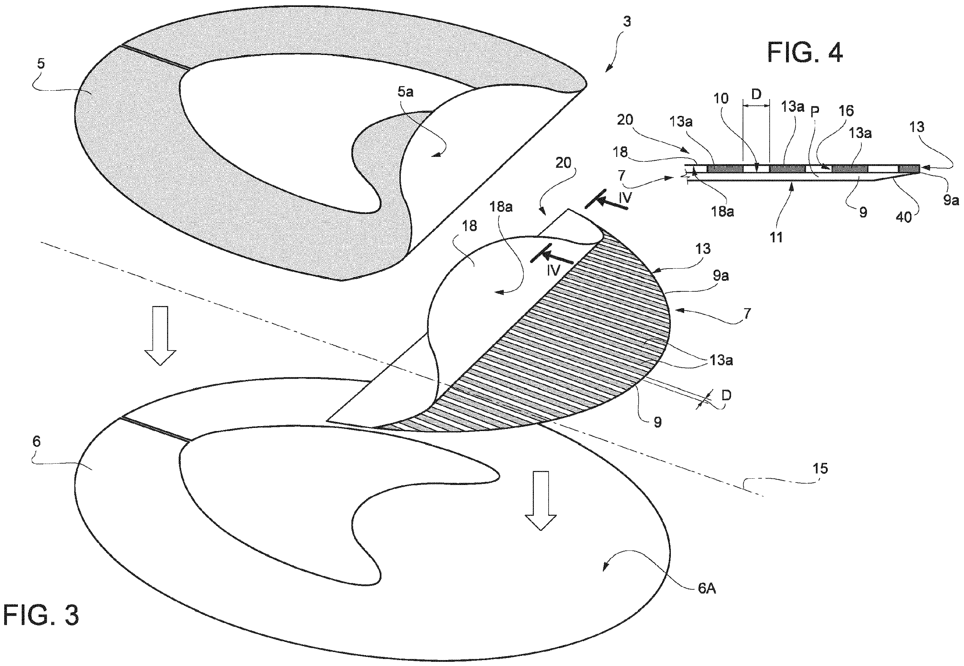

Regardless of how the shoe upper 2 is joined to the sole 4, with reference to Figures 2 and 3, the shoe upper 2 comprises an outer sheet 5, preferably made of breathable material, such as leather or fabric, and defining an outer surface of the shoe 1; an inner sheet 6, generally called lining, which at least partially covers the outer sheet 5 and is, preferably, also made of breathable material; and a reinforcement which is interposed between the outer sheet 5 and the inner sheet 6 and is defined, in the specific case illustrated, by a toe cap 7.

According to a variant, not illustrated, the inner sheet 6 is absent (for example in unlined summer shoes), i.e. the shoe upper 2 consists solely of the outer sheet 5 and the associated reinforcement (defined by the toe cap 7 in this case, as mentioned above).

The toe cap 7 comprises a reinforcement layer 9, which has a profile or perimeter edge 9a shaped according to the type and form of the shoe 1 and according to the area of the shoe upper 2 in which it is attached, and can also be made of a breathable material.

The material of the reinforcement layer 9 is of a known type, so that it is not described here in detail. For example, it can be a fabric, a leather, a plastic material, a composite material (for example cotton-based), etc...

The reinforcement layer 9 has two faces 10 and 11, which are opposite each other and face, respectively, towards an inner surface 5a of the outer sheet 5, and towards an outer surface 6a of the inner sheet 6 (i.e. towards the inside of the shoe 1).

The toe cap 7 further comprises a layer of solid adhesive material 13, which is placed directly on the face 10 and is preferably discontinuous. In other words, the layer 13 consists of a plurality of portions 13a, which are attached to the surface 5a and are spaced from one another.

According to an aspect of the present invention, the solid adhesive material of the layer 13 belongs to the family of PSA adhesives (Pressure-Sensitive Adhesives), containing 100% solid or dry adhesive material, i.e. without solvents and emulsions. For example, a PSA adhesive belonging to the sub-family of acrylic-based adhesives or to the sub-family of rubber-based adhesives (natural or synthetic) is used.

The solid adhesive material of the layer 13 consists of a film, also called a transfer film, protected by at least one film generally called a liner, as will also be described in the following.

For example, the portions 13a are elongated portions defined by respective beads or strips of solid adhesive material.

Still in the described example, when the toe cap 7 is in an undeformed condition, illustrated in Figure 3, the aforementioned beads are straight and parallel to one another. In the discussed case related the toe cap 7, preferably the beads are substantially parallel to a longitudinal direction 15 that extends from a toe 2A towards a heel 2B of the shoe upper 2 (Figure 2).

With reference to Figure 4, for example the beads are placed at a same distance D from one another. The beads delimit between them respective recesses 16, without adhesive material, on the face 10. In other words, at the recesses 16, the reinforcement layer 9 has a plurality of areas P that alternate with the portions 13a and, on the face 10, are without adhesive. As a result, the breathability and elasticity of the areas P of the reinforcement layer 9 are not altered or compromised by the solid adhesive material.

According to not illustrated variants, the portions 13a can define discontinuous beads, and/or not be straight (for example, be curved), and/or not be parallel (so that they can intersect), or they can define respective points or spots spaced from one another. In all these variants, the portions 13a are spaced from one other so as to define the recesses 16.

In general, the geometry and/or the distribution of the portions 13a for forming the layer 13 is chosen at the design stage, for example according to the tensile elasticity required of the toe cap 7 and thus of the shoe upper 2. In other words, the geometry and/or the distribution of the portions 13a is chosen according to the shaping required for the same shoe upper 2, to facilitate such shaping, even when the position/size of the reinforcement to be applied and the type of the shoe 1 vary.

Before the assembly of the shoe upper 2, the toe cap 7 constitutes part of a reinforcement element 20, in which the layer of solid adhesive material 13 is protected by a liner or film 18, which is removed from said layer 13 shortly before the layer 13 of the toe cap 7 is applied to the surface 5a of the outer sheet 5.

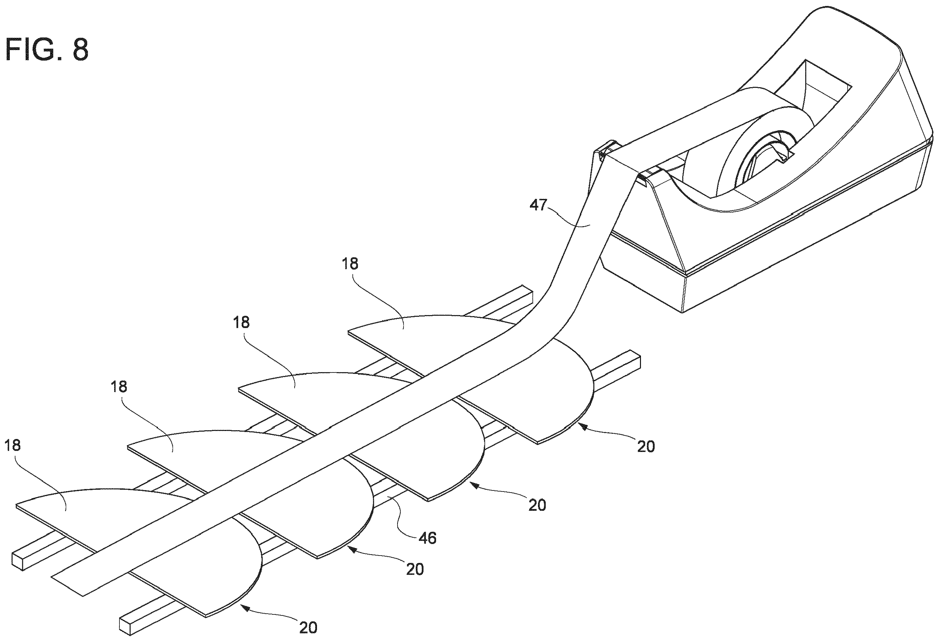

The element 20 is thus a multi-layered body, independent of the sheets 5 and 6, is easy to handle, and is storable together with other elements 20, either in the form of a stack (not illustrated), or in the form of a succession of elements carried by a same supporting adhesive tape (Figure 8), when it is necessary to assemble a plurality of shoe uppers 2, in series.

According to a preferred aspect of the present invention, in the element 20 that is to be used to assemble the shoe upper 2, the face 11 of the reinforcement layer 9 is without adhesive material (only the face 10 has adhesive material); in particular, the face 11 is completely free, exposed to the outside environment.

On the opposite side, the film 18 has a face 18a which is arranged in contact with the layer 13. The latter has a lower adhesive capacity (i.e., a higher release capacity) vis-à-vis the face 18a than the adhesive capacity present vis-à-vis the face 10 of the reinforcement layer 9. In this manner, during the assembly of the shoe upper 2 shown in Figure 3, the film 18 is removed, but the solid adhesive material of the layer 13 remains firmly joined to the face 10 of the reinforcement layer 9, and is not stripped away together with the film 18.

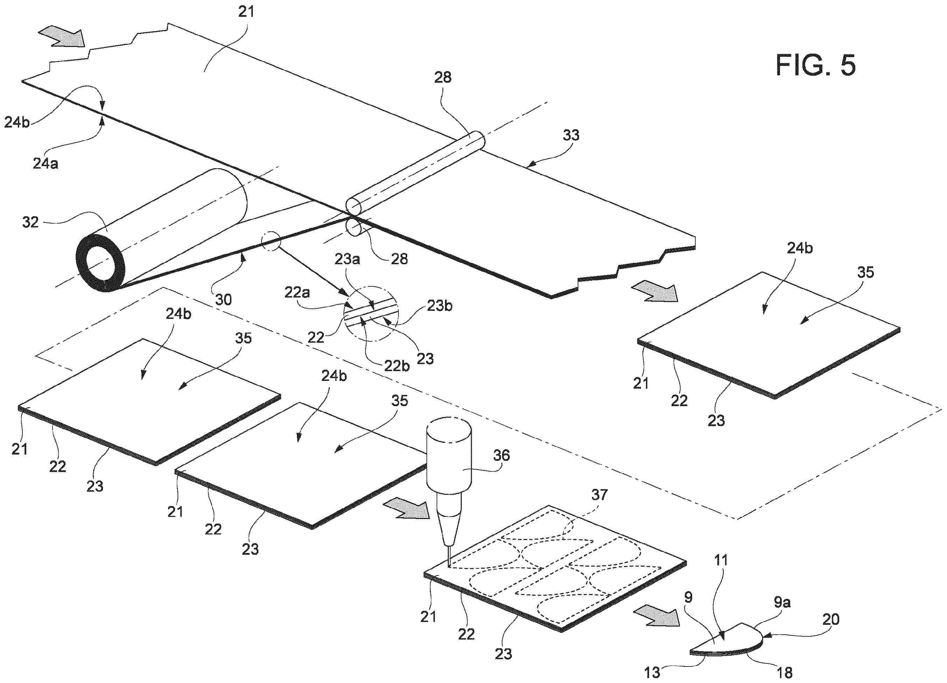

With reference to Figure 5, the element 20 is produced by means of the following manufacturing method, according to a preferred embodiment of the present invention.

The material that constitutes the reinforcement layer 9 is produced in a known manner, not described in detail herein, at the site of a manufacturer in the form of a, relatively extended, sheet 21, preferably in the form of a tape.

A solid adhesive material 22 is applied on only one of the two opposite faces of the sheet 21. This face is indicated by the reference number 24a. The opposite face, indicated by the reference number 24b, remains without adhesives and is thus completely free.

The adhesive material 22 has two faces 22a and 22b, opposite each other: the face 22a is attached to the face 24a, and the face 22b is covered by a liner sheet 23, which is of a removable type. The adhesive material 22 and the sheet 23 will subsequently define, respectively, the layer 13 and the film 18, as will become evident from the following description. Therefore, the characteristics described above for the portions 13a and the film 18 are found in the adhesive material 22 and the sheet 23, respectively.

The coupling of the adhesive material 22 is carried out, preferably, by the manufacturer of the sheet 21, directly along the production line (for example, before performing a finishing cut that removes the selvedges of the tape defined by the sheet 21).

More specifically, the combination of the adhesive material 22 and the sheet 23, attached to each other, is fed in the form of a tape 30 towards the face 24a, in a manner synchronized with the feeding of the sheet 21, and is made to adhere to the face 24a by means of a compression action, for example by rolling performed by cylinders or calenders 28. This compression action causes the adhesive material to adhere to the sheet 21 and, preferably, is performed cold, i.e. at room temperature (or in any case at temperatures below 80 °C), and without fluid activating agents (i.e. in a dry manner).

Preferably, the tape 30 is stored in the form of a reel 32, which is unwound progressively in order to feed said tape 30 towards the face 24a.

The sheet 23 has two opposite faces, 23a and 23b, with different adhesive capacities (or release capacities) than the adhesive material 22: the face 23a has a higher adhesive capacity (lower release capacity) and, during the unwinding of the reel 32, remains attached to the face 22b of the adhesive material, while the face 23b has a lower adhesive capacity (higher release capacity) and is thus readily detached (so as to release the tape 30 which will then be attached to the face 24a of the sheet 21).

According to a variant not illustrated, the two faces 23a and 23b are protected by respective films, one of which is removed in order to be able to attach the adhesive material 22 onto the face 24a.

Alternatively, the step of coupling the tape 30 can be carried out by a subcontracting company instead of being carried out by the manufacturer of the sheet 21.

The combination of the sheet 21, the adhesive material 22 and the liner sheet 23 defines a multi-layered product, preferably in the form of a tape 33, which can potentially be wound in reels, in a manner not illustrated, to facilitate storage and/or transport. More preferably, the tape 33 is cut to form a plurality of rectangular slabs 35 of predefined dimensions (for example, with a superficial extension of about 1-1.5 m2 each).

Regardless of the outer format of this multi-layered product (slab 35 or tape 33), the face 24b of the sheet 21 remains without adhesive in order to be subsequently processed.

This multi-layered product is cut by means of a blanking machine or a cutting table, of a known type, schematically illustrated in Figure 5, and indicated by the reference number 36.

The cut occurs along one or more predefined paths 37, in a closed loop, which correspond to the outline of the edge 9a, so as to form the perimeter of one or more elements 20 according to this outline.

It is thus evident that, for each element 20, the sheets 21 and 23 and the adhesive material 22 are cut together by means of a single operation or a single cut, so as to obtain, respectively, the reinforcement layer 9, the film 18 and the layer 13, according to the outer dimensions and shape required by the shoe factory.

Furthermore, if the multi-layered product is supplied in the form of slabs 35, it is also possible during cutting to superimpose two or more slabs 35 (held in a relatively fixed position by means of staples, for example, in a manner not illustrated), in order to cut them all together in the same operation.

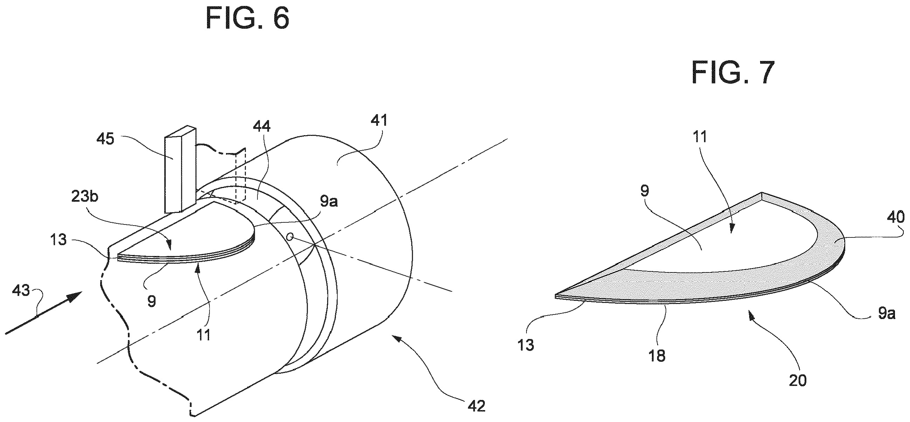

After cutting, the elements 20 that have been formed are separated from the scraps and from the remaining part of cut product, and are then subjected to a skiving operation, along at least part of the perimeter edge 9a. The term "skiving" is understood to mean an operation to eliminate the small ridge naturally present along this edge 9a due to the thickness of said edge 9a. In the jargon, it is also referred to as skiving the edge down to zero. In practice, skiving reduces the thickness of the reinforcement layer 9 along at least part of the edge 9a, removing material from the face 11 that corresponds to the face 24b, so as to form a bevel or junction 40 (Figures 4 and 7) on the face 11 in order to eliminate this ridge. This material removal is carried out while working on the entire element 20, i.e. without detaching the layer 13 and the film 18.

As illustrated schematically in Figure 6, the skiving can be carried out by means of a tool defined by a blade 41, mounted in a machine 42 of a known type. In the specific example, the blade 41 is defined by the cutting edge of a bell-shaped body rotated about its own axis. In this example, the element 20 is manually inserted along a direction 43 (substantially parallel to the axis of the bell-shaped body) into a slot which is defined, on one side, by a motorized wheel 44 and, on the opposite side, by an adjustable presser foot (illustrated as a dashed line).

The distance of this presser foot from the wheel 44 is adjustable based on the thickness of the element 20 to be processed.

In the slot, the face 11 of the element 20 makes contact with the wheel 44 and is dragged by the latter in a tangential direction (i.e., along the direction 43). A shoulder 45 can serve as a reference for supporting the edge 9a, in a direction parallel to the axis of the wheel 44.

At the exit of the aforementioned slot, the face 11 of the element 20 comes into contact with the blade 41 and is cut along part of the edge 9a.

It is noted, however, that it is possible to use skiving machines, of a known type, different from the one schematically illustrated in Figure 6 to bevel the edge 9a.

The use of the blade 41 as a skiving tool generates scraps, which are relatively easy to remove, substantially with no dust.

Figure 7 shows an example, in which the entire edge 9a has been skived. As mentioned in the foregoing, it may be sufficient to skive only a part.

During skiving, the film 18 is not touched by the blade 41. The film 18 basically does not wrinkle, break or detach from the layer 13 during skiving. In this regard, the outer face of the film 18 is relatively slippery, and has a relatively low adhesive capacity (relatively high release capacity); in this regard, the film 18 is a siliconized film, for example a siliconized paper. This characteristic promotes the sliding of the element 20 along the direction 43 on the presser foot of the slot described above, thus avoiding a lubrication of said film 18.

More specifically, it has been experimentally noted that the film 18 does not form any wrinkles if it has a relatively low thickness, particularly if it has a basis weight less than or equal to 90 g/m2. For example, the basis weight is about 65 g/m2.

In general (not only for the skiving), it is additionally preferable that the thickness and/or the basis weight is greater than a minimum value, to be identified by means of appropriate testing, in order to avoid a tearing of the film 18.

The skiving, preferably, can be carried out by the company that carried out the cutting operations.

Once the skiving has been carried out, the elements 20 are grouped by size and shape according to the requirements of the customer (shoe factory) in order to then proceed with packaging. As mentioned above, the elements 20 are stacked so as to form homogeneous packages, bound for example by means of a rubber band; or, as schematically shown in Figure 8, they can be placed on adjustable positioning jigs 46 (schematically illustrated), and in aligned positions, in order to then apply a supporting tape 47 to them which keeps them coupled, and in succession. The adhesive face of the tape 47 is attached to the film 18. On the opposite, non-adhesive face, it is possible to display one or more codes (for example a code for each of the elements 20 carried by the tape 47) in order to easily identify the type (shape, size, position in the shoe, etc.) of the elements 20.

Regardless of the type of packaging, after skiving, the elements 20 are ready for the assembly of the shoe upper 2, which is carried out in a joining department (directly at the shoe factory, or at an external supplier).

As mentioned above with reference to Figure 3, the film 18 is removed by means of a simple manual pulling action so as to uncover the layer 13, which is then placed on the surface 5a, where it adheres without the need for external activating agents and without the need for heating. In practice, the layer 13 of solid adhesive material and the reinforcement layer 9 are applied simultaneously on the surface 5a of the outer sheet 5.

Preferably, the toe cap 7 is placed and attached to the outer sheet 5 in a manual manner, even remotely from the actual joining departments. It is thus evident that the positioning and the adhesion of the toe cap 7 occur without the aid of specific equipment (without heaters, without suction units, etc.), with considerable energy savings for the factory.

After having attached the toe cap 7 to the outer sheet 5 of the shoe upper 2, the inner sheet 6, if provided, is placed over it, and the surface 6a is bonded to the face 11 and to the remaining free part of the surface 5a.

For this bonding, it is possible to spray a water-based glue as in traditional procedures.

It is also possible to adopt an alternative technique, not illustrated, for attaching the inner sheet 6 to the toe cap 7: in fact, after the skiving, it is possible to apply additional portions of solid glue (PSA adhesive) to the face 11 of the reinforcement layer 9. The additional portions of solid glue, preferably, are arranged at positions spaced from one another on the face 11 and are staggered, at least in part, with respect to the portions 13a on the face 10, so that the reinforcement layer 9 has areas P that are without adhesive material on both the face 10 and the face 11, in order to maintain the breathability of the toe cap 7 at the areas P.

For example, the application of this layer with additional portions of solid glue onto the face 11 can be carried out using the technique described in the patent application EP 2043474 A1.

Next, the shoe upper 2 assembled with the reinforcement (i.e. with the toe cap 7) is subjected to pressure in order to promote the adhesion of the components, for example by means of a press not illustrated, which operates cold, i.e. at room temperature, and without any fluid agents for activating the adhesive material, i.e. in a dry manner. In particular, the maximum temperature during pressing is 80 °C.

After pressing, the portions 13a of solid adhesive material tend to be squashed, but still remain spaced from one another, so as to ensure the breathability and deformability of the areas P of the reinforcement layer 9, and thus the deformability of the shoe upper 2. The distance D and the amount of adhesive material of the portions 13a are determined so as to maintain a residual distance between the portions 13a after this pressing operation.

Finally, in the shoe factory, shaping of the shoe upper 2 and construction of the shoe follow, according to known techniques.

It is evident from the foregoing that the method of the present invention, carried out to obtain the reinforcement defined by the toe cap 7, allows the procedure for assembling and reinforcing the shoe upper 2 to be greatly simplified, by eliminating various steps and/or making them extremely flexible compared to the known techniques.

In particular, thanks to the element 20 produced with the method of the present invention, it is possible to attach the reinforcement, defined by the toe cap 7, by simply removing the film 18 and placing the layer 13 of solid adhesive material on the face 5a of the outer sheet 5, without the need for heating or other agents to activate the adhesive material and without producing volatile substances during bonding.

In other words, after the skiving, it is possible to attach the toe caps 7 directly to the shoe uppers 2, even in a manual manner, without the need for machinery and with reduced personnel, compared to the known solutions which involve the use of thermo-adhesive reinforcements.

In particular, the bonding on the outer sheet 5 is essentially immediate (there is no adhesive cross-linking time required) and solves all the problems stemming from liquid adhesives and from thermo-adhesive reinforcements.

In fact, the use of a solid adhesive carried by the reinforcement layer 9 does not require equipment for heating, spraying, drying, fume suction, etc., and does not require any liquid or aeriform agents for the activation of the adhesive materials, as explained above.

In other words, the attachment of the toe cap 7 to the outer sheet 5 of the shoe upper 2 requires extremely low costs and limited space (since it practically only requires a press) and can potentially be carried out remotely. The work environment becomes immensely healthier and more comfortable, despite the absence of fume hoods.

At the same time, the pattern defined by the portions 13a ensures an even bonding that avoids the formation of wrinkles, folds, depressions, bulges or hardened areas. The reinforced area of the shoe upper 2 thus always has a high aesthetic quality and a sensitivity to the touch that are comparable, if not identical, to those of the other areas of the shoe upper 2, and this makes it possible to produce quality footwear.

The solid adhesive material, as it has a reduced ability to deform under a load, i.e. is highly cohesive, helps to reinforce the shoe upper 2. Furthermore, it does not stain the outer sheet 5 and thus the shoe upper 2 has a uniform appearance.

The removal of the film 18 from the solid adhesive material during the assembly of the shoe upper 2 is also easy due to the fact that no wrinkles, tears and/or detachments of the film 18 occurred during skiving.

Furthermore, the solid adhesive material deposited in the form of portions 13a spaced from one another, for example deposited in the form of parallel strips, helps to facilitate the release of the film 18 from the solid adhesive material.

Furthermore, this arrangement of the solid adhesive material, alternated with the recesses 16, improves the elasticity of the shoe upper 2 during subsequent shaping operations, compared to a potential continuous layer of solid adhesive, as mentioned above; in fact, the shoe upper 2 is easily deformable and shapable, even after a relatively long time after pressing, due to the presence of areas P left without the adhesive material on the face 10.

As shown in Figure 8, then, it is possible to provide a supporting tape 47 (adhesive on only one of its faces) in order to place and hold the elements 20 in predefined positions, in order to facilitate packaging in boxes and/or the subsequent assembly operations to be carried out on a series of shoe uppers 2. As mentioned above, the supporting tape 47 may have the indication of an identification code for each element 20 that is supported.

It is additionally evident from the foregoing that modifications and variations can be introduced with respect to the foregoing description, without departing from the scope of protection defined by the appended claims as a result.

In particular, the present invention also applies to reinforcements (not illustrated) other than the toe cap 7, i.e. to reinforcements for other areas of the shoe upper 2, in particular for the area placed at the heel 2B (Figure 2), or for intermediate areas between the toe 2A and said heel 2B. In these cases, the arrangement and/or direction of the portions 13a of adhesive material will be chosen so as to facilitate the deformability and the necessary shape of the part in question.

It is additionally apparent that the method and the element 20 of the present invention can be used for any footwear, whether elegant, sporty, etc...

Finally, as mentioned above, the layer 13 of solid adhesive material could potentially be continuous, instead of consisting of portions 13a spaced from one another, although at the expense of flexibility and breathability.

## Claims

1. Manufacturing method comprising the steps of:
- cutting a product (33,35) along a predefined path (37), so as to form the perimeter of a support element (20) comprising a reinforcement layer (9) which has a first face (10) and a second face (11) opposite each other;
- after the cutting step, reducing the thickness of said reinforcement layer (9) along at least a part of said perimeter, by removing material from said second face (11) ;
**characterized in that** said product (33,35), that is subjected to the cutting step, is a multi-layered product consisting of:
a) a reinforcement sheet (21) defining said reinforcement layer (9) and having a first and a second face (24a,24b), which correspond respectively to the first and second face (10,11) of said reinforcement layer (9);
b) a solid adhesive material (22) defined by a PSA adhesive and having a third and a fourth face (22a,22b) opposite each other, said third face (22a) being attached on said first face (24a) before the cutting step;
c) a liner sheet (23) attached on said fourth face (22b) and removable from said fourth face (22b);
so that, after the cutting step, said support element (20) further comprises:
- an adhesive layer (13) defined by cut solid adhesive material, and placed on the first face (10) of said reinforcement layer (9), and
- a film (18) defined by cut liner sheet, and placed in contact with said adhesive layer (13);
and wherein the removal of material from the second face (11) of said reinforcement layer (9), in order to reduce the thickness along its perimeter, is carried out without detaching said adhesive layer (13) and said film (18).

2. The method according to claim 1, wherein said liner sheet (23) has a basis weight of less than 90 g/m2.

3. The method according to claim 1 or 2, wherein said liner sheet (23) is a siliconized film.

4. The method according to any one of the preceding claims, wherein said solid adhesive material (22) consists of a plurality of portions of solid adhesive material (13a), which are spaced from one another on said first face.

5. The method according to claim 4, wherein said portions of solid adhesive material (13a) are defined by strips or beads parallel to one another.

6. The method according to any one of the preceding claims, wherein the step of reducing the thickness is carried out by means of a blade (41) so as to obtain a bevel (40) on said second face (11) along at least a part of said perimeter.

7. The method according to any one of the preceding claims, wherein the cutting step is carried out so as to cut said reinforcement sheet (21), said solid adhesive material (22) and said liner sheet (23) all together, with a single cut.

8. The method according to any one of the preceding claims, wherein the second face of said reinforcement sheet is without adhesive material.

9. The method according to claim 8, wherein said multi-layered product is obtained by the following operations:
- providing a tape (30) consisting of said solid adhesive material (22) and of said liner sheet (23);
- feeding said reinforcement sheet (21) and said tape (30) so that they move forward synchronously;
- pressing said tape (30) against said first face (24a) so as to attach said solid adhesive material (22) to said reinforcement sheet, during the forward movement.

10. The method according to any one of the preceding claims, wherein a row of said support elements (20) are coupled to one another by a single supporting adhesive tape (47), after the step of reducing the thickness.

11. The method according to any one of the preceding claims, wherein a further layer of solid adhesive material, defined by a PSA adhesive, is placed on said second face (11), after the step of reducing the thickness.

12. Support element (20) for reinforcement of a shoe upper (2), produced according to the method of any one of the preceding claims, and comprising:
- a reinforcement layer (9), which has a perimeter edge (9a) and a first and a second face (10,11) opposite each other;
- an adhesive layer (13), defined by a PSA adhesive, and having a third and a fourth face opposite each other; said third face being attached on said first face (10);
- a removable film (18), attached on said fourth face and removable from said fourth face;
wherein said reinforcement layer (9) has a reduction in thickness on said second face (11) along at least a part of said perimeter edge (9a).

13. The support element according to claim 12, wherein said adhesive layer (13) consists of a plurality of portions of solid adhesive material (13a) spaced from one another on said first face (10).

14. Shoe upper (2) comprising:
- a sheet (5) having
a) an outer surface, defining an outer profile of a shoe, and
b) an inner surface (5a) opposite said outer surface; and
- a reinforcement (7) attached to said inner surface (5a); **characterized in that** said reinforcement (7) consists of the reinforcement layer (9) and of the adhesive layer (13) in the support element (20) according to any one of claims 12 to 13.
